# EUROPEAN PATENT APPLICATION

(11) **EP 4 847 205 A1**
(43) Date of publication of application: **02.12.2026**
(21) Application number: 26170824.2
(22) Date of filing: 07.04.2026
(51) Int. Cl.: B25D 17/14, B01D 46/76, B23Q 11/00, B25D 17/00

(54) **DUST COLLECTION DEVICE**

(30) Priority: 29.05.2025 CN 202510712561; 29.05.2025 CN 202510712326
(71) Applicant: Nanjing Chervon Industry Co., Ltd., Nanjing, Jiangsu 211106 (CN)
(72) Inventor: LU, Wei, Nanjing, Jiangsu 211106 (CN); XU, Manfei, Nanjing, Jiangsu 211106 (CN); XU, Cong, Nanjing, Jiangsu 211106 (CN); YAO, Jiuling, Nanjing, Jiangsu 211106 (CN)
(74) Representative: Sun, Yiming

(57) **Abstract**

Dust collection device 10, which can be disposed on a working tool 20 to collect dust during operation. The dust collection device includes: a housing 100 that is provided with a mounting portion 110 mounted to the working tool; a transfer assembly 200 that is at least partially located in the housing, and configured to transfer the dust; a dust box 300 that is connected to the housing, and in communication with the transfer assembly to collect the dust; and a vibration applying assembly 500 that is configured to apply vibration to the dust box, wherein the vibration applying assembly includes a striking member 510 and an operating member 520; the operating member is operable to cause the striking member to periodically strike the dust box; and the striking member strikes the dust box at at least two different positions, such that the striking position changes during a striking process.

## Description

### TECHNICAL FIELD

The present disclosure relates to a dust collection structure, and in particular, to a dust collection device.

### BACKGROUND

In the related art, an electric hammer is an electric power tool integrating rotary impact and striking functions, and is mainly used for drilling or chiseling hard materials such as concrete, bricks, and ceramic tiles. By combining the rotational force and impact force of an electric drill, it can efficiently perform tasks that are difficult for conventional electric drills, and has become a common tool in construction, decoration, hydropower installation, and other fields. During drilling or chiseling, the electric hammer inevitably generates a large amount of dust. The flying dust not only pollutes the environment, but also endangers the user's health. To suppress dust emission, a dust collection device is provided on the electric hammer, thereby forming a dust collector of the electric hammer.

After the existing dust collection device has been used for a period of time, dust will heavily accumulate on a filter member of the dust collection device, thereby compromising the filtering performance of the filter member. The filtering performance of the dust collection device can be restored only by replacing the filter member. However, frequent replacement of the filter member not only increases the use cost but also affects the operating efficiency of the electric hammer.

This part provides background information related to the present application, and the background information is not necessarily existing art.

### SUMMARY

An objective of the present application is to solve or at least alleviate part or all of the preceding problems. In view of this, an objective of the present disclosure is to provide a dust collection device. The dust collection device has a vibrating dust removal function, and the vibration applying assembly is structurally simple with fewer components.

To achieve the above objective, the present disclosure adopts the following technical solutions:

A dust collection device is constructed to be disposed on a working tool to collect dust during operation. The dust collection device includes: a housing that is provided with a mounting portion mounted to the working tool; a transfer assembly that is at least partially disposed in the housing, and configured to transfer the dust; a dust box that is connected to the housing, and in communication with the transfer assembly to collect the dust; and a vibration applying assembly that is configured to apply vibration to the dust box, where the vibration applying assembly includes a striking member and an operating member; the operating member is configured to generate a translational displacement component along a preset direction; and the striking member is configured to be driven by the operating member to strike an outer surface of the dust box, such that the dust box vibrates.

In some embodiments, the vibration applying assembly is disposed on an outer wall of the dust box.

In some embodiments, the striking member is configured to be driven by the operating member to generate, on the outer surface of the dust box, a translational displacement component parallel to the outer surface.

In some embodiments, the vibration applying assembly further includes: a base that is fixed on an outer wall of the dust box; the base is provided with a mounting rail; and the striking member and the operating member are attached on the base through the mounting rail, and are movable along a direction of the mounting rail.

In some embodiments, the mounting rail includes at least one of a linear rail segment and a curved rail segment; and/or, the mounting rail is a closed rail or an open rail.

In some embodiments, the vibration applying assembly further includes: an elastic member that is disposed between the operating member and the striking member, so as to accumulate a force for the striking member to strike an outer wall of the dust box.

In some embodiments, the striking member strikes the dust box at different positions; and the mounting rail includes at least one of a linear rail segment and a curved rail segment.

In some embodiments, an operating force acting on the operating member has a component force along an arrangement direction of a mounting rail, so as to drive the operating member to move along a direction of the mounting rail.

A dust collection device is constructed to be disposed on a working tool to collect dust during operation. The dust collection device includes: a housing that is provided with a mounting portion mounted to the working tool; a transfer assembly that is at least partially located in the housing, and configured to transfer the dust; a dust box that is connected to the housing, and in communication with the transfer assembly to collect the dust; and a vibration applying assembly that is configured to apply vibration to the dust box, where the vibration applying assembly includes a striking member and an operating member; the operating member is operable to cause the striking member to periodically strike the dust box; and the striking member strikes the dust box at at least two different positions, such that the striking position changes during a striking process.

In some embodiments, the vibration applying assembly is fixedly disposed on an outer wall of the dust box.

In some embodiments, the vibration applying assembly is detachably disposed on an outer wall of the dust box.

In some embodiments, the dust box is detachably connected to the housing.

In some embodiments, the operating member is operable by an operating force to generate a translational displacement component parallel to an outer surface of the dust box.

In some embodiments, the vibration applying assembly further includes: a base that is fixed on an outer wall of the dust box; the base is provided with a mounting rail; and the striking member and the operating member are attached on the base through the mounting rail, and are movable along a direction of the mounting rail.

In some embodiments, the mounting rail includes at least one of a linear rail segment and a curved rail segment.

In some embodiments, the mounting rail is a closed rail or an open rail.

In some embodiments, the base and the dust box are integrally formed.

In some embodiments, the striking member is driven by the operating member to strike the base along the mounting rail; and a striking force is transmitted to the dust box through the base.

In some embodiments, a plurality of striking recesses are formed in the dust box; and the striking member is driven by the operating member to move among the plurality of striking recesses.

In some embodiments, the vibration applying assembly further includes: an elastic member that is disposed between the operating member and the striking member, so as to accumulate a force for the striking member to strike an outer wall of the dust box.

In some embodiments, the striking member is configured to generate a translational displacement component on an outer surface of the dust box with the operating member.

In some embodiments, an operating force acting on the operating member has a component force along an arrangement direction of a mounting rail, so as to drive the operating member to move along a direction of the mounting rail.

In some embodiments, filter paper and a filter paper holder are disposed in the dust box; and the filter paper is detachably disposed in the filter paper holder.

In some embodiments, the filter paper is configured to be manually detachably disposed in the filter paper holder without the aid of an external tool.

A dust collection device is constructed to be disposed on a working tool to collect dust during operation with airflow. The dust collection device includes: a housing that is provided with a mounting portion, so as to be fixed to the working tool; a transfer assembly that includes a head mechanism configured to suck dust, and a telescopic transfer tube including one end connected to the head mechanism, and another end extending into the housing; and a dust box that is connected to the housing, and in communication with the transfer tube to collect the dust, where the dust collection device further includes: a first rigid support member that includes one end fixed to the head mechanism, and another end connected to an outer side of the housing; and the first rigid support member is slidable relative to the housing along an extension direction of the first rigid support member.

In some embodiments, the first rigid support member is connected to the outer side of the housing through a selective restriction mechanism; when the selective restriction mechanism is in a restricted state, the first rigid support member is fixed to the outer side of the housing without movement; and when the selective restriction mechanism is in an unrestricted state, the first rigid support member is slidable relative to the housing along the extension direction of the first rigid support member.

In some embodiments, a cross-section of the first rigid support member is less than a cross-section of the transfer tube.

In some embodiments, a maximum length of the transfer tube that can be exposed out of the housing is substantially equal to a length of the first rigid support member.

In some embodiments, the first rigid support member and the transfer tube are independent of each other without a nested or coaxial relationship.

In some embodiments, the first rigid support member and the transfer tube are respectively connected to different mounting positions of the head mechanism.

In some embodiments, the first rigid support member includes at least one supporting long pin.

In some embodiments, the transfer tube includes at least one of a spring-type telescopic tube, a foldable telescopic tube, and a segmental telescopic tube.

A dust collection device is constructed to be disposed on a working tool to collect dust during operation with airflow. The dust collection device includes: a housing that is provided with a mounting portion, so as to be fixed to the working tool; a transfer assembly that includes a head mechanism configured to suck dust, and a telescopic transfer tube including one end connected to the head mechanism, and another end extending into the housing; and a dust box that is connected to the housing, and in direct or indirect communication with the transfer tube to collect the dust, where the dust collection device further includes: a first rigid support member that includes one end fixed to the head mechanism, and another end connected to the housing; and the first rigid support member is substantially eccentrically parallel to the transfer tube, so as to support or guide extension or retraction of the transfer tube.

In some embodiments, the first rigid support member is connected to an outer side of the housing through a selective restriction mechanism; when the selective restriction mechanism is in a restricted state, the first rigid support member is fixed to the outer side of the housing without movement; and when the selective restriction mechanism is in an unrestricted state, the first rigid support member is slidable relative to the housing along an extension direction of the first rigid support member.

In some embodiments, a cross-section of the first rigid support member is less than a cross-section of the transfer tube.

In some embodiments, a maximum length of the transfer tube that can be exposed out of the housing is substantially equal to a length of the first rigid support member.

In some embodiments, the first rigid support member and the transfer tube are independent of each other without a nested or coaxial relationship.

In some embodiments, the first rigid support member and the transfer tube are respectively connected to different mounting positions of the head mechanism.

In some embodiments, the first rigid support member includes at least one supporting long pin.

In some embodiments, the transfer tube includes at least one of a spring-type telescopic tube, a foldable telescopic tube, and a segmental telescopic tube.

A dust collection device is constructed to be disposed on a working tool to collect dust during operation with airflow. The dust collection device includes: a housing that is provided with a mounting portion, so as to be fixed to the working tool; a transfer assembly that includes a head mechanism configured to suck dust, and a telescopic transfer tube including one end connected to the head mechanism, and another end extending into the housing; and a dust box that is connected to the housing, and in direct or indirect communication with the transfer tube to collect the dust, where the dust collection device further includes: a tube support member that is at least partially disposed in the housing and covers at least a part of the transfer tube; and a second rigid support member that includes one end fixed to the head mechanism, and another end located in the tube support member; and the second rigid support member is substantially eccentrically parallel to the transfer tube.

In some embodiments, the second rigid support member and the transfer tube are independent of each other without a nested or coaxial relationship.

In some embodiments, the tube support member and the transfer tube are disposed in a nested manner.

In some embodiments, the second rigid support member and the transfer tube are respectively connected to different mounting positions of the head mechanism.

In some embodiments, a cross-section of the second rigid support member is less than a cross-section of the transfer tube.

In some embodiments, the second rigid support member includes at least one supporting long pin.

### BRIEF DESCRIPTION OF THE DRAWINGS

FIG. 1 is a schematic view of an electric power tool;
FIG. 2 is a sectional view of an electric power tool;
FIG. 3 is an exploded view of a dust collection device;
FIG. 4 is a sectional view of a dust collection device;
FIG. 5 is a schematic view of a right shell of a dust collection device;
FIG. 6 is a schematic view of a left shell of a dust collection device;
FIG. 7 is a schematic view of a head mechanism;
FIG. 8 is a sectional view of a head mechanism;
FIG. 9 is a comparison diagram of a dust collection device disposed on two electric hammers;
FIG. 10 is a schematic view when an electric power tool is provided with a first rigid support member;
FIG. 11 is a schematic view when a dust collection device is provided with a first rigid support member;
FIG. 12 is a schematic view when an electric power tool is provided with a second rigid support member;
FIG. 13 is a top view when an electric power tool is provided with a second rigid support member;
FIG. 14 is a sectional view when an electric power tool is provided with a second rigid support member;
FIG. 15 is a schematic view of a dust box;
FIG. 16 is a sectional view of a dust box;
FIG. 17 is a schematic view when a cover of a filter cartridge is closed;
FIG. 18 is a schematic view when a cover of a filter cartridge is open;
FIG. 19 is a schematic view after filter paper is taken out from a filter paper holder;
FIG. 20 is a schematic view of a box body of a dust box and a vibration applying assembly; and
FIG. 21 is a front view of a box body of a dust box and a vibration applying assembly.

10: dust collection device;
100: housing, 110: mounting portion, 111: mounting guide rail groove, 120: passage portion, 130: shell, 131: front shell portion, 132: rear shell portion, 133: left shell, 134: right shell, 135: second connecting portion, 101: transfer passage, 102: circulation passage, 103: flow guiding rib, 1031: first flow guiding rib, 10311: first vertical rib segment, 10312: first oblique rib segment, 10313: first horizontal rib segment, 10314: second horizontal rib segment, 10315: second oblique rib segment, 10316: third horizontal rib segment, 10317: second vertical rib segment, 1032: second flow guiding rib, 104: dust outlet, and 105: air inlet;
200: transfer assembly, 210: head mechanism, 211: mechanism base, 2111: connecting port, 2112: first connecting portion, 212: dust collecting head tube, 2121: dust collecting port, 2122: dust collecting cavity, 213: connection assembly, 214: limiting portion, 215: limiting member, 216: elastic body, 217: bracket fastener, and 220: transfer tube;
300: dust box, 301: dust inlet, 302: air outlet, 310: box body, 311: striking recess, 312: boss portion, 313: recess portion, 320: filter cartridge, 321: filter paper, 322: filter paper holder, 3221: mounting frame, and 3222: cover;
410: first rigid support member, 420: adjustment knob, 430: tube support member, and 440: second rigid support member;
500: vibration applying assembly, 510: striking member, 520: operating member, 521: operating portion, 522: sliding portion, 523: mounting groove, 530: elastic member, and 540: base; and
20: working tool, 21: tool body, 22: electric motor, 23: working end, 24: battery pack, 25: working attachment, 26: battery mounting portion, and 27: insertion portion.

### DETAILED DESCRIPTION OF THE EMBODIMENTS

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate member and the two members or assemblies are connected by the at least one intermediate member. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

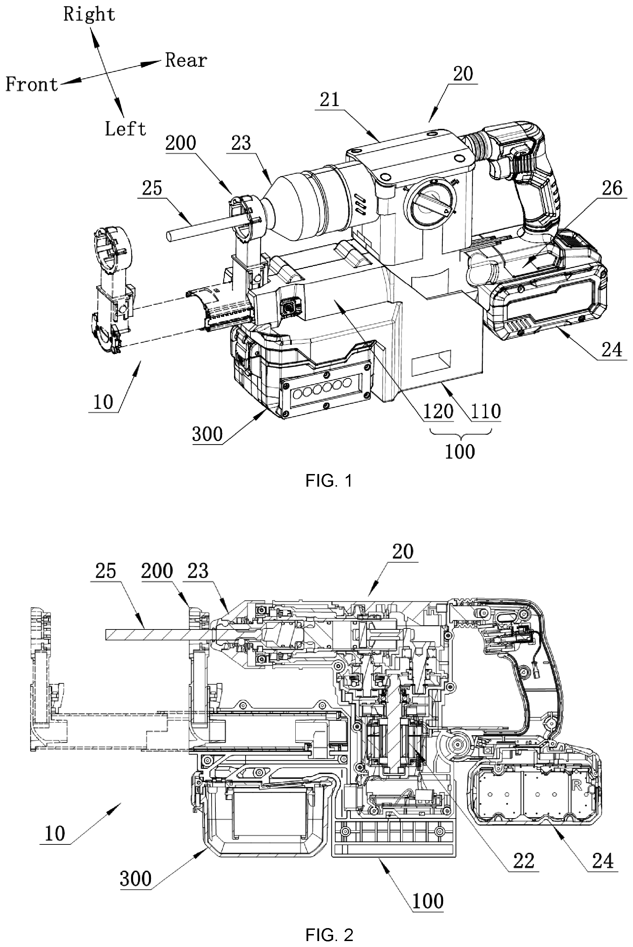

As shown in FIGS. 1 and 2, the present disclosure provides a dust collection device 10. The dust collection device 10 is constructed to be disposed on a working tool 20. It makes use of airflow formed during operation of the working tool 20 to collect dust during the operation. In some embodiments, the working tool 20 is an electric hammer. The dust collection device 10 is configured to collect dust during operation of the electric hammer, such that the dust can be collected centrally without scattering into the air to affect the environment and the user's health. Certainly, in other embodiments, the working tool 20 may also be an electric drill or other electric power tools that generate dust during operation. The dust collection device 10 is typically disposed on a front end of the working tool 20.

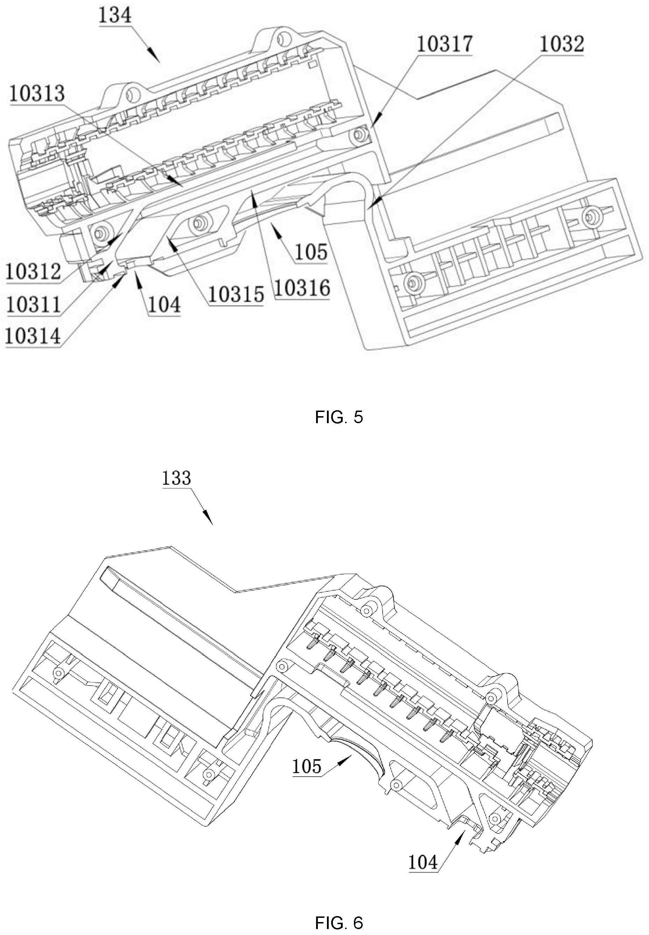

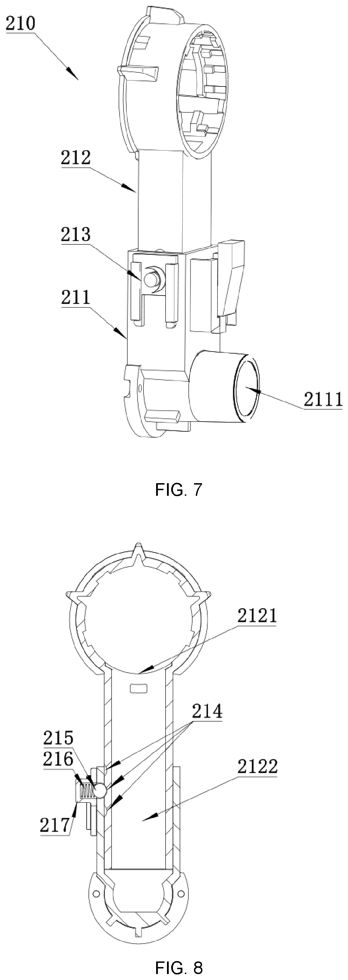

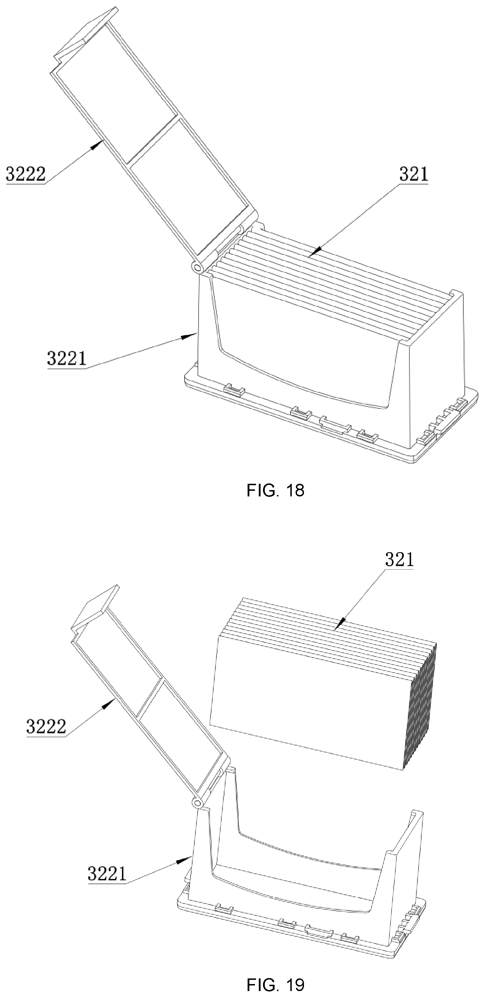

As shown in FIGS. 1 to 19, the dust collection device 10 includes a housing 100, a transfer assembly 200, and a dust box 300. The housing 100 serves as a main mounting structure. Both the transfer assembly 200 and the dust box 300 are disposed on the housing 100. The transfer assembly 200 includes a head mechanism 210 configured to suck the dust and a transfer passage 101 configured to transfer the dust. The dust box 300 is configured to collect the dust transferred by the transfer assembly 200. In an embodiment, the transfer assembly 200 is disposed on a front end of the housing 100, and the dust box 300 is disposed on a lower end of the housing 100.

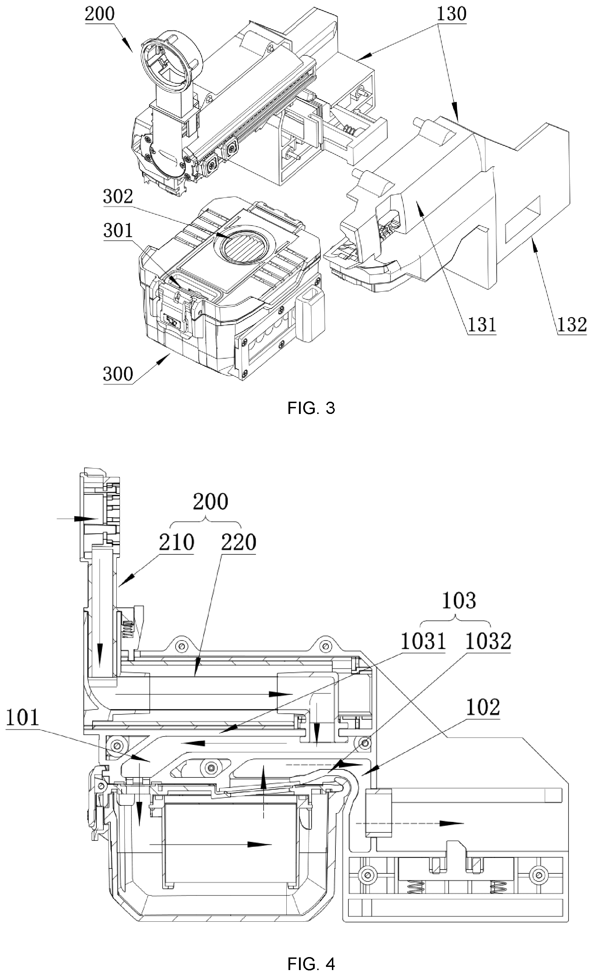

In this embodiment of the present disclosure, referring also to FIG. 4, the transfer passage 101 is partially formed by the housing 100. Compared with a passage that is configured to transfer the dust with a tube and a removable connector in the prior art, the dust collection device 10 provided by this embodiment of the present disclosure makes use of the housing 100 to form a part of the transfer passage 101 to transfer the dust. This not only reduces the number of components of the dust collection device 10 and simplifies the structure of the dust collection device 10, but also improves the assembly efficiency of the dust collection device 10 as well as the structural compactness and integration of the dust collection device 10.

In some embodiments, the dust box 300 is further configured to deliver clean airflow with the dust filtered to the working tool 20. The housing 100 further forms at least a part of a circulation passage 102 for the clean airflow. The dust collection device 10 provided by this embodiment of the present disclosure makes use of the housing 100 to form at least a part of the circulation passage 102. This not only reduces the number of components of the dust collection device 10 and simplifies the structure of the dust collection device 10, but also improves the assembly efficiency of the dust collection device 10 as well as the structural compactness and integration of the dust collection device 10.

A flow path of the airflow in the dust collection device 10 is as follows: Dusty airflow enters the transfer assembly 200 from the head mechanism 210. Then, the dusty airflow enters the transfer passage 101 in the housing 100. The dusty airflow flowing out from the transfer passage 101 enters the dust box 300 and is filtered, thereby forming solid dust and clean airflow. The solid dust remains in the dust box 300, while the clean airflow flows out from the dust box 300 to the circulation passage 102. At last, the clean airflow flowing out from the circulation passage 102 enters the working tool 20. It is to be noted that the solid arrow in FIG. 4 represents the flow path of the dusty airflow in the dust collection device 10, while the dashed arrow in FIG. 4 represents the flow path of the clean airflow in the dust collection device 10. In addition, the clean airflow can be used to dissipate heat from a heating component in the working tool 20.

To mount the housing 100 on a tool body 21 of the working tool 20, the housing 100 is provided with a mounting portion 110 that can be mounted to the working tool 20. In an embodiment, the mounting portion 110 is disposed on a rear end of the housing 100. The mounting portion 110 is detachably disposed on a front end of a lower portion of the tool body 21.

To realize a detachable connection between the dust collection device 10 and the working tool 20, in some embodiments, the dust collection device 10 cooperates with the working tool 20 in an inserted manner. Specifically, a mounting guide rail groove 111 is formed in the mounting portion 110. An insertion portion 27 is disposed on the working tool 20. By inserting the insertion portion 27 into the mounting guide rail groove 111, inserted cooperation between the dust collection device 10 and the working tool 20 can be realized. Certainly, in other embodiments, the mounting portion 110 may also be disposed on a side of the housing 100, such that the dust collection device 10 can be disposed on a side of the working tool 20. The mounting manner between the dust collection device 10 and the working tool 20 is not limited to insertion, and may also be realized by clamping. For example, a clamping structure is disposed on the mounting portion 110. By clamping the clamping structure to a clamping position of the working tool 20, clamped cooperation is realized.

To facilitate manufacturing of the housing 100 and assembly of the housing 100 with the transfer assembly 200 and the like, in this embodiment of the present disclosure, the housing 100 is configured as a split structure. Specifically, the housing 100 includes at least two shells 130 that can be docked with each other. The entire housing 100 can be formed by docking all the shells 130 together. The housing 100 formed by splicing a plurality of shells 130 is not only convenient to manufacture, but also facilitates assembly of the transfer assembly and the dust box 300 to the housing 100.

In some embodiments, the housing 100 includes two shells 130. The two shells 130 are respectively a left shell 133 and a right shell 134. The left shell 133 and the right shell 134 are spliced in a left-right direction to form the housing 100. Certainly, in other embodiments, the two shells 130 may also be respectively an upper shell and a lower shell. The upper shell and the lower shell are spliced in an up-down direction to form the housing 100. In addition, there may also be three, four or more shells 130 as required.

Each shell 130 includes a front shell portion 131 and a rear shell portion 132 that are connected in a front-rear direction. Two front shell portions 131 are spliced to form a passage portion 120. A passage configured to allow the airflow to flow and a chamber configured to allow the transfer assembly 200 to be mounted in are formed in the passage portion 120. Two rear shell portions 132 are spliced to form the mounting portion 110. It is to be noted that the passage includes the transfer passage 101 for transferring the dust and the circulation passage 102 for the clean airflow.

In some embodiments, a flow guiding rib 103 is disposed on an inner side of the shell 130, and the passage is formed with the flow guiding rib 103. Specifically, each shell 130 is provided thereon with the flow guiding rib 103. After the shells 130 are docked, flow guiding ribs 103 form the passage in the housing 100. With the flow guiding ribs 103 on the shells 130 for forming the closed passage to serve as the transfer passage 101 and the circulation passage 102, not only can the structure be simplified, but also the cross-sectional areas of the transfer passage 101 and the circulation passage 102 are increased to make the airflow smoother. Concerning a height of the flow guiding rib 103, in a specific embodiment, the flow guiding rib 103 is 3.5 mm high.

Specifically, to form the transfer passage 101 with the shells 130, after the shells 130 are docked, flow guiding ribs 103 on the docked shells 130 cooperate to form the transfer passage 101, so as to guide the dust.

For convenience of description, the flow guiding ribs 103 forming the transfer passage 101 are defined as first flow guiding ribs 1031. Concerning a structure of the first flow guiding ribs 1031, in some embodiments, two first flow guiding ribs 1031 are disposed on an inner wall of each docked shell 130. The two first flow guiding ribs 1031 are spaced apart. When the shells 130 are docked completely, first flow guiding ribs 1031 of the docked shells 130 are in one-to-one correspondence in a docking direction. After the shells 130 are docked completely, end surfaces of facing first flow guiding ribs 1031 abut against each other, thereby forming the circumferentially sealed transfer passage 101. Meanwhile, all docked first flow guiding ribs 1031 have ends defining a dusty airflow inlet, and another ends defining a dust outlet 104 of the transfer passage 101.

In some embodiments, the first flow guiding ribs 1031 extend along a front-rear direction of the shell 130.

In some embodiments, each first flow guiding rib 1031 is in the shape of a polygonal line. Further, the transfer passage 101 is provided with at least one 180° bending region, such that the dust is transferred in two opposite directions.

In a specific embodiment, the first flow guiding rib 1031 located at a front upper position includes, in the front-rear direction of the shell 130, a first vertical rib segment 10311, a first oblique rib segment 10312, and a first horizontal rib segment 10313 that are connected in sequence. The first flow guiding rib 1031 located at a rear lower position includes, in the front-rear direction of the shell 130, a second horizontal rib segment 10314, a second oblique rib segment 10315, a third horizontal rib segment 10316, and a second vertical rib segment 10317 that are connected in sequence. A bottom end of the first vertical rib segment 10311 is connected to a front end of the second horizontal rib segment 10314. A top end of second vertical rib segment 10317 is connected to a rear end of the first horizontal rib segment 10313. The first horizontal rib segment 10313, the first oblique rib segment 10312, the first vertical rib segment 10311, the second horizontal rib segment 10314, the second oblique rib segment 10315, the third horizontal rib segment 10316, and the second vertical rib segment 10317 are connected end to end to form an annular structure. More specifically, the dust outlet 104 is formed in the second horizontal rib segment 10314, while the dusty airflow inlet is formed in the first horizontal rib segment 10313.

To form the circulation passage 102 with the shells 130, after the shells 130 are docked, flow guiding ribs 103 on the docked shells 130 cooperate to form at least a part of the circulation passage 102, so as to guide the clean airflow to flow out of the dust collection device 10.

For convenience of description, the flow guiding ribs 103 forming the circulation passage 102 are defined as second flow guiding ribs 1032. Concerning a structure of the second flow guiding ribs 1032, in some embodiments, two second flow guiding ribs 1032 are disposed on an inner wall of each docked shell 130. The two second flow guiding ribs 1032 are spaced apart. When the shells 130 are docked completely, second flow guiding ribs 1032 of the docked shells 130 are in one-to-one correspondence in a docking direction. After the shells 130 are docked completely, end surfaces of facing second flow guiding ribs 1032 abut against each other, thereby forming the circumferentially sealed circulation passage 102. Meanwhile, all docked second flow guiding ribs 1032 have ends defining an air inlet 105 of the circulation passage 102, and another ends defining an air outlet of the circulation passage 102.

In some embodiments, the second flow guiding ribs 1032 extend along the front-rear direction of the shell 130.

In some embodiments, each second flow guiding rib 1032 is in the shape of a polygonal line, a curved line or a combination of the polygonal line and the curved line. Further, the circulation passage 102 is provided with at least one 180° bending region, such that the clean airflow can smoothly enter the working tool 20.

Further, to improve circumferential sealing performance of the transfer passage 101 and the circulation passage 102 formed after docking, in some embodiments, an end surface of the flow guiding rib 103 is provided with at least one flange or recess. After the shells 130 are docked, the flange or the recess on the flow guiding rib 103 of one docked shell 130 can cooperate with the recess or the flange on the flow guiding rib 103 of another docked shell 130 to form a labyrinth sealing path. This can improve the circumferential sealing performance of the transfer passage 101 and the circulation passage 102, thereby preventing leakage of dust or gas into a portion other than the transfer passage 101 and the circulation passage 102 in the housing 100 to cause contamination or damage to other components.

The end surface of the flow guiding rib 103 is further provided with a sealing member, so as to seal the docked end surface of the flow guiding rib 103 after the shells 130 are docked. This can improve the circumferential sealing performance of the transfer passage 101 and the circulation passage 102, thereby preventing leakage of dust or gas into a portion other than the transfer passage 101 and the circulation passage 102 in the housing 100 to cause contamination or damage to other components. The sealing member may be a sealing ring, a sealing strip, a sealant, or the like.

In some embodiments, projection of the transfer passage 101 formed by the housing 100 for the dust and projection of the circulation passage 102 formed by the housing for the clean airflow at least partially overlap in a horizontal plane. The transfer passage 101 and the circulation passage 102 are separated from each other through the flow guiding rib 103. In this way, the transfer passage 101 and the circulation passage 102 can share the flow guiding rib 103, i.e., the flow guiding rib 103 serves as both the first flow guiding rib 1031 and the second flow guiding rib 1032, such that the structure is more compact.

In some embodiments, a part of the transfer passage 101 formed by the housing 100 for the dust is substantially parallel to an output axis of the working tool 20. In some embodiments, a part of the circulation passage 102 formed by the housing 100 for the clean airflow is substantially parallel to the output axis of the working tool 20.

In some embodiments, a plane where the dust outlet 104 of the transfer passage 101 formed by the housing 100 is located and a plane where the air inlet 105 of the circulation passage 102 formed by the housing 100 for the clean airflow is located are substantially the same or parallel.

The head mechanism 210 disposed on a front end of the transfer assembly 200 is configured to collect the dust. A rear end of the transfer assembly 200 can be disposed in the housing 100, and may specifically be inserted into the chamber of the passage portion 120 of the housing 100. A position of the working tool 20 on a working object (such as a wall and a stone) is defined as a working position. During operation of the working tool 20, since the front end of the transfer assembly 200 is located fittingly at the working position, dust generated at the working position can be directly collected by the front end of the transfer assembly 200, thereby preventing the dust from dispersing into the air.

The head mechanism 210 includes a mechanism base 211 and a dust collecting head tube 212. The mechanism base 211 includes a connecting port 2111 connected to the transfer passage 101 and a connection assembly 213 connected to the dust collecting head tube 212. The dust collecting head tube 212 includes a dust collecting port 2121 and a dust collecting cavity 2122. The dust collecting port 2121 is configured to collect the dust. Dust at the dust collecting port 2121 is driven by airflow to enter the dust collecting cavity 2122, thereby entering the transfer passage 101 of the transfer assembly 200.

Both the mechanism base 211 and the dust collecting head tube 212 substantially extend along a vertical direction. A top end of the dust collecting head tube 212 serves as a dust suction end. The dust collecting port 2121 is formed in the dust suction end. The dust is sucked to the dust collecting cavity 2122 from the dust collecting port 2121, and then flows along the transfer passage 101 of the transfer assembly 200. In some embodiments, the dust suction end is of an annular structure. After the mounting portion 110 of the dust collection device 10 is disposed on the working tool 20, a working component (such as a drill bit) of the working tool 20 passes through the annular structure. The dust collecting port 2121 is formed in an inner wall of the annular structure. Dust generated during the operation of the working component on the working object can be obstructed by the inner annular wall of the dust suction end and enters the transfer passage 101 from the dust collecting port 2121.

The transfer assembly 200 further includes a transfer tube 220 connected to the head mechanism 210. One end of the transfer tube 220 is connected to the head mechanism 210. Another end of the transfer tube 220 extends into the housing 100. The transfer tube 220 is configured to transfer the dust, and constitutes a part of the transfer passage 101. One end of the transfer tube 220 is connected to the head mechanism 210. The mechanism base 211 of the head mechanism 210 is provided with the connecting port 2111 connected to the transfer tube 220. The another end of the transfer tube 220 is airtightly connected to an end of the shell 130 forming the transfer passage 101. Another end of the shell 130 forming the transfer passage 101 is airtightly connected to the dust box 300.

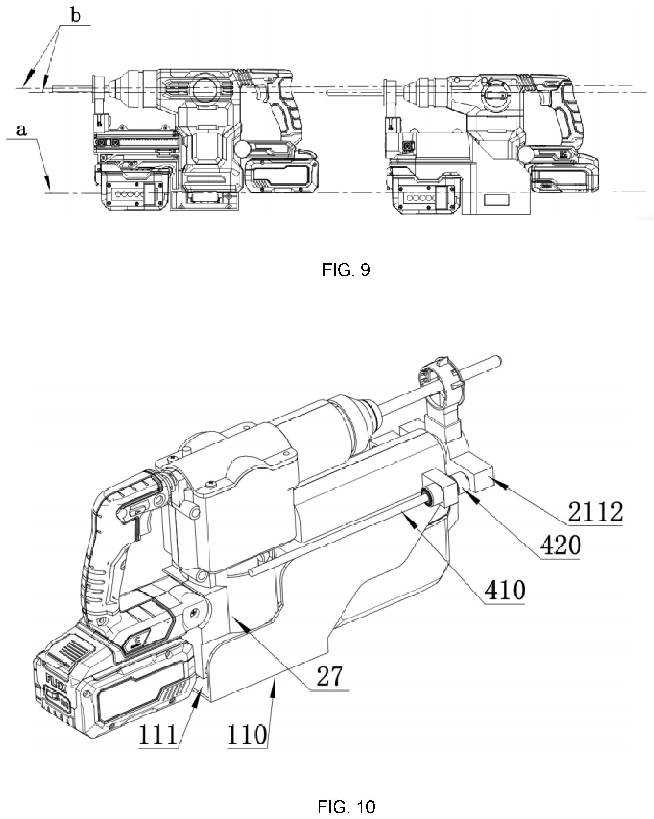

Working tools 20 of different specifications have different sizes and different shapes. Referring also to FIG. 9, taking electric hammers of 24 mm and 30 mm as examples for comparison, it can be clearly seen that distances between planes a of the guide rail grooves in the mounting portions 110 and axes b of output shafts of the working components are different. Therefore, in the prior art, the electric hammer of one specification is typically provided with one dust collection device 10, resulting in poor adaptability and high cost. In order that the head mechanism 210 can be docked with different working tools 20, and to improve the adaptability of the dust collection device 10 and reduce the use cost of the user, in some embodiments, the head mechanism 210 is operable to move in two directions perpendicular to each other. This can compensate height difference ab of the working tool 20 with a height of the head mechanism 210, achieving correct mounting of the dust collection device 10, and making a dust collecting head of the head mechanism 210 concentric with a drill bit of the working tool 20.

In some embodiments, the head mechanism 210 is operable to move along a height direction of the head mechanism 210. In some embodiments, in a height direction perpendicular to an extension direction of the transfer tube 220, the head mechanism 210 is height-adjustable.

To move the head mechanism 210 in its height direction, continuous limiting portions 214 are formed on a side wall of the dust collecting head tube 212 along the height direction. The connection assembly 213 includes a limiting member 215. The limiting member 215 can be limited in each of the limiting portions 214, so as to keep the dust collecting head tube 212 at a limited height position.

In some embodiments, the limiting portion 214 includes a plurality of limiting recesses that are arranged at intervals in the height direction. The limiting member 215 is a limiting steel ball. The limiting steel ball is movable between the plurality of limiting recesses. After the limiting steel ball is clamped into one limiting recess, the dust collecting head tube 212 is limited at one height position. Certainly, in other embodiments, the limiting portion 214 includes a limiting passage. The limiting passage extends in a height direction of the dust collecting head tube 212. A plurality of locking positions are arranged at intervals in the limiting passage. The limiting member 215 is a limiting block. The limiting block is movable in the limiting passage and is locked at one locking position.

The head mechanism 210 further includes a bracket fastener 217 and an elastic body 216. A mounting space for mounting the bracket fastener 217 is formed in the mechanism base 211. A sliding groove for mounting the limiting member 215 is formed in the bracket fastener 217. The elastic body 216 is disposed in the sliding groove, and between a bottom of the sliding groove and the limiting member 215, so as to provide a pressing force to retain the limiting member 215 in the limiting portion 214. In some embodiments, the bracket fastener 217 further includes a gripping portion protruding from the mechanism base 211. The gripping portion facilitates force application of the user.

In some embodiments, the head mechanism 210 is further operable to move along the extension direction of the transfer tube 220. Since one end of the transfer tube 220 is connected to the head mechanism 210, as the transfer tube 220 extends, an end of the transfer tube 220 connected to the head mechanism 210 can extend out of the housing 100.

In order that the transfer tube 220 can be adaptively adjusted as the head mechanism 210 moves, in some embodiments, the transfer tube 220 is telescopic, such that the transfer tube 220 is adjusted according to a specification of the working component. That is, the transfer tube 220 is configured as a telescopic tube. It is to be noted that the transfer tube 220 includes at least one of a spring-type telescopic tube, a foldable telescopic tube, and a segmental telescopic tube. Exemplarily, the transfer tube 220 is a corrugated tube.

Exemplarily, to improve the extension and retraction precision of the transfer tube 220 in its extension direction, prevent excessive deformation from affecting smooth flowing of the dusty airflow, and support movement of the head mechanism 210, the dust collection device 10 further includes a rigid support member. The rigid support member is connected to the housing 100 through a selective restriction mechanism, so as to support the telescopic tube to extend and retract along its extension direction and drive the head mechanism 210 to move. When the selective restriction mechanism is in a restricted state, the rigid support member is fixed to an outer side of the housing 100 without movement. When the selective restriction mechanism is in an unrestricted state, the rigid support member is slidable relative to the housing 100 along its extension direction, so as to allow transfer of the head mechanism 210 with extension and retraction of the telescopic tube.

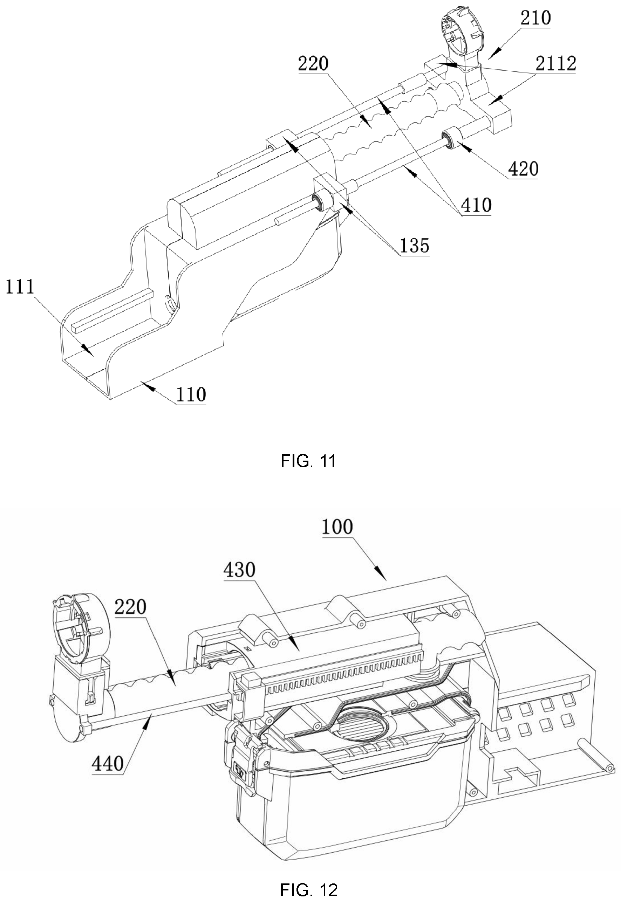

The rigid support member may be connected to an exterior of the housing 100 through the selective restriction mechanism. Specifically, referring also to FIGS. 10 and 11, the rigid support member includes a first rigid support member 410. One end of the first rigid support member 410 is fixed to the head mechanism 210. Another end of the first rigid support member 410 is connected to the outer side of the housing 100. The first rigid support member 410 is slidable relative to the housing 100 along its extension direction. The first rigid support member 410 is connected to the outer side of the housing 100 through the selective restriction mechanism. When the selective restriction mechanism is in the restricted state, the first rigid support member 410 is fixed to the outer side of the housing 100 without movement. When the selective restriction mechanism is in the unrestricted state, the first rigid support member 410 is slidable relative to the housing 100 along its extension direction. This not only meets the long-stroke drilling requirements of the electric hammer and intuitively observes the dust collection during drilling, but also simplifies the structure and reduces the cost.

In some embodiments, the first rigid support member 410 includes at least one supporting long pin. One end of the supporting long pin is connected to the mechanism base 211. Another end of the supporting long pin is slidably connected to the outer side of the housing 100. There may be one, two or more supporting long pins as required. If there is one supporting long pin, the head mechanism 210 is supported unilaterally. If there are two supporting long pins, the head mechanism 210 is supported bilaterally. If there are three or more supporting long pins, the head mechanism 210 is supported multi-laterally.

Exemplarily, there are two supporting long pins. The two supporting long pins are respectively disposed on left and right sides of the housing 100. Two first connecting portions 2112 are disposed on a bottom of the mechanism base 211. Ends of the two supporting long pins are respectively connected to the two first connecting portions 2112. Two second connecting portions 135 are respectively disposed on the left and right sides of the housing 100. Another ends of the two supporting long pins are respectively connected to the two second connecting portions 135.

In a specific embodiment, a cross-section of the first rigid support member 410 is less than a cross-section of the transfer tube 220. In a specific embodiment, a graduation line is disposed on the supporting long pin. An indication structure is disposed on the housing 100. Through a corresponding relationship between the indication structure and a graduation on the graduation line, telescopic lengths of the transfer tube 220 and the head mechanism 210 can be displayed.

For a specific structure of the selective restriction mechanism, in a specific embodiment, the selective restriction mechanism uses a thread-locking rotating shaft structure. Specifically, the rigid support member further includes an adjustment knob 420. The adjustment knob 420 is fixedly sleeved on the supporting long pin. One end of the supporting long pin is rotatably connected to the first connecting portion 2112. The supporting long pin passes through the second connecting portion 135 and is threadedly connected to the second connecting portion 135. By rotating the adjustment knob 420, the supporting long pin can rotate relative to the first connecting portion 2112 and the second connecting portion 135, and move relative to the second connecting portion 135. Since the threaded connection has a self-locking function, the supporting long pin does not move relative to the second connecting portion 135 when the adjustment knob 420 is not rotated. Certainly, in addition to the thread-locking rotating shaft structure, in another embodiment, the selective restriction mechanism may also use a clutch-type connecting structure. Alternatively, the selective restriction mechanism may also use an interactive shaft pin mechanism.

In some embodiments, the first rigid support member 410 is substantially eccentrically parallel to the transfer tube 220, so as to support or guide the extension and retraction of the transfer tube 220. This can further improve the linearity of the extension and retraction of the transfer tube 220.

In some embodiments, the first rigid support member 410 and the transfer tube 220 are independent of each other without a nested or coaxial relationship.

In some embodiments, a maximum length of the transfer tube 220 that can be exposed out of the housing 100 is substantially equal to a length of the first rigid support member 410.

In some embodiments, the first rigid support member 410 and the transfer tube 220 are respectively connected to different mounting positions of the head mechanism 210. Exemplarily, a middle of a bottom of the mechanism base 211 is provided with a connecting tube portion. The transfer tube 220 cooperates with the connecting tube portion in an inserted manner. The connecting port 2111 is formed in the connecting tube portion.

The rigid support member may be further connected to an interior of the housing 100 through the selective restriction mechanism. Specifically, referring also to FIGS. 12-14, the dust collection device 10 further includes a tube support member 430 that is at least partially disposed in the housing 100 and covers at least a part of the transfer tube 220. The rigid support member includes a second rigid support member 440. One end of the second rigid support member 440 is fixed to the head mechanism 210. Another end of the second rigid support member 440 is located in the tube support member 430. The second rigid support member 440 is substantially eccentrically parallel to the transfer tube 220. By disposing the second rigid support member 440 in the housing 100, the transfer tube 220 and the head mechanism 210 are supported and guided. Meanwhile, the inner tube structure in which the tube support member 430 and the second rigid support member 440 are disposed in the housing 100 not only features a simple structure, small-sized components, and high precision of a support surface, but also reduces shaking at a tube opening, facilitates after-sales maintenance, and eliminates the need for detachment of the housing 100.

It is to be noted that in an extension direction of the second rigid support member 440, the tube support member 430 is movable relative to the housing 100, and the second rigid support member 440 is movable relative to the tube support member 430. In this way, the head mechanism 210 extends and retracts in two stages, which is more suitable for long-stroke movement.

In some embodiments, the second rigid support member 440 includes at least one supporting long pin. One end of the supporting long pin is connected to the mechanism base 211. Another end of the supporting long pin is slidably connected to an inner side of the housing 100. There may be one, two or more supporting long pins as required. If there is one supporting long pin, the head mechanism 210 is supported unilaterally. If there are two supporting long pins, the head mechanism 210 is supported bilaterally. If there are three or more supporting long pins, the head mechanism 210 is supported multi-laterally.

Exemplarily, there are two supporting long pins. The two supporting long pins are respectively disposed on left and right sides of the tube support member 430. Two first connecting portions 2112 are disposed on a bottom of the mechanism base 211. Ends of the two supporting long pins are respectively connected to the two first connecting portions 2112. Two third connecting portions are respectively disposed on the left and right sides of the tube support member 430. Another ends of the two supporting long pins are respectively connected to the two third connecting portions.

In an embodiment, a cross-section of the second rigid support member 440 is less than a cross-section of the transfer tube 220. In an embodiment, a graduation line is disposed on the supporting long pin. An indication structure is disposed on the housing 100 or the tube support member 430. Through a corresponding relationship between the indication structure and a graduation on the graduation line, telescopic lengths of the transfer tube 220 and the head mechanism 210 can be displayed.

In some embodiments, the second rigid support member 440 and the transfer tube 220 are independent of each other without a nested or coaxial relationship.

In some embodiments, the tube support member 430 and the transfer tube 220 are disposed in a nested manner.

In some embodiments, the second rigid support member 440 and the transfer tube 220 are respectively connected to different mounting positions of the head mechanism 210. Exemplarily, a middle of a bottom of the mechanism base 211 is provided with a connecting tube portion. The transfer tube 220 cooperates with the connecting tube portion in an inserted manner. The connecting port 2111 is formed in the connecting tube portion.

It is to be noted that the second rigid support member 440 and the first rigid support member 410 may be provided independently or simultaneously, and may also be flexibly selected as required.

The dust box 300 is configured to collect dust carried in the airflow entering the dust collection device 10, and purify the dusty airflow into the clean airflow. In this embodiment of the present disclosure, the dust box 300 is at least partially accommodated in the housing 100. Exemplarily, the dust box 300 is detachably disposed on a bottom of the housing 100. The detachable connection includes, but is not limited to, inserted connection, two-end clamped connection, one-end rotational connection and the other-end clamped connection, and the like. The dust box 300 is in direct or indirect communication with the transfer assembly 200 to collect the dust.

The dust box 300 includes a box body 310 and a filter cartridge 320. The box body 310 is detachably connected to the housing 100. A dust collection chamber, and a dust inlet 301 and an air outlet 302 that are in communication with the dust collection chamber, are formed in the box body 310. The filter cartridge 320 is disposed in the box body 310 and configured to filter the dust. The filter cartridge 320 is located in the dust collection chamber and disposed on an airflow path formed between the dust inlet 301 and the air outlet 302. The dusty airflow can enter the dust collection chamber through the dust inlet 301, and the clean airflow with the dust filtered can be guided back to the tool body 21 through the air outlet 302. The dusty airflow enters the box body 310 from the dust inlet 301 and passes through the filter cartridge 320. Solid dust particles are obstructed by the filter cartridge 320 and thus retained in the box body 310. The clean airflow with the dust filtered can be discharged from the air outlet 302.

In some embodiments, the dust outlet of the transfer tube 220 is in indirect communication with the dust inlet 301 in the dust box 300 through a passage in the housing 100. More specifically, in some embodiments, the dust outlet of the transfer tube 220 is in indirect communication with the dust inlet 301 in the dust box 300 through the transfer passage 101. The dust is transferred to the dust box 300 from the transfer tube 220 through the transfer passage 101.

In some embodiments, the air outlet 302 of the dust box 300 is in indirect communication with the air inlet of the working tool 20 through a passage in the housing 100. More specifically, in some embodiments, the air outlet 302 of the dust box 300 is in indirect communication with the air inlet of the working tool 20 through the circulation passage 102, and the clean airflow is transported to the working tool 20 from the dust box 300 through the circulation passage 102. In more details, the air outlet 302 of the dust box 300 is in communication with air inlet 105 of the circulation passage 102. An air outlet of the circulation passage 102 is in communication with the air inlet of the tool body 21. Airflow flowing out from the dust box 300 flows through the circulation passage 102 to the tool body 21.

The filter cartridge 320 includes a filter paper 321 and a filter paper holder 322. The filter paper 321 is folded into a multi-layer structure. The filter paper 321 is detachably disposed in the filter paper holder 322. In this embodiment of the present disclosure, the filter cartridge 320 may be manually disassembled and assembled without an aid of an external tool. Compared with the prior art in which when the filter cartridge is replaced, the holder is detached together with a tool for overall replacement, the filter paper 321 of the filter cartridge 320 provided in this embodiment of the present disclosure can be replaced without the aid of the tool, and the filter paper 321 can also be replaced independently. This not only improves the replacement speed of the filter cartridge 320, but also reduces the maintenance cost of after-sales wearing parts, thereby significantly reducing the use cost.

Specifically, the filter paper holder 322 includes a mounting frame 3221 and a cover 3222. A top opening and a side opening are formed in the mounting frame 3221. The cover 3222 includes one end rotatably connected to the mounting frame 3221, and another end provided with a latching structure. The cover 3222 may be latched or unlatched with the mounting frame 3221 via rotation. When the filter paper 321 needs to be replaced, the cover 3222 can be rotated to a position that avoids the top opening. User's fingers can grip the old filter paper 321 in the mounting frame 3221 through the side opening and pull the old filter paper 321 out from the top opening. A new filter paper 321 can be directly inserted into the mounting frame 3221 through the top opening. At last, the cover 3222 is rotated to the latching position.

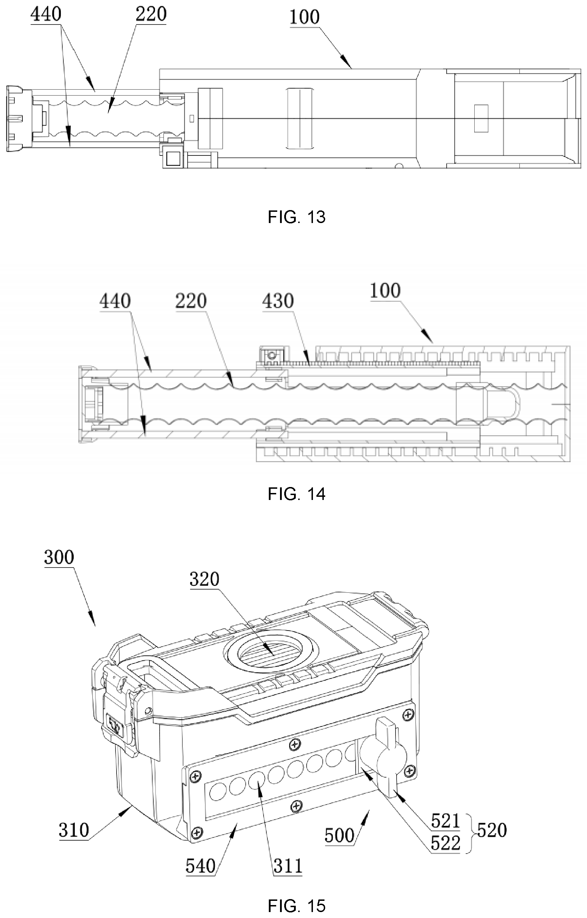

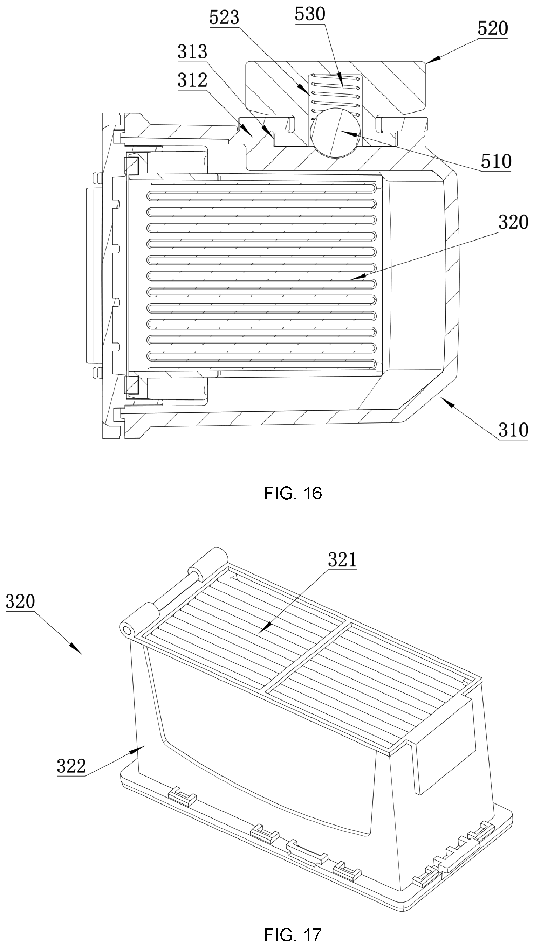

To prevent the dust from accumulating on the filter cartridge 320 and thereby affecting the dust collection efficiency of the dust box 300, referring also to FIGS. 15 and 16, the dust collection device 10 further includes a vibration applying assembly 500. The vibration applying assembly 500 is configured to apply vibration to the dust box 300. By applying the vibration to the dust box 300 with the vibration applying assembly 500, the dust is vibrated from the filter cartridge 320 to the box body 310, thereby restoring a filtering function of the filter cartridge 320. With the vibration applying assembly 500, the dust box 300 has an automatic dust cleaning function. By periodically vibrating the dust box 300 with the vibration applying assembly 500, not only is the deep blockage of the filter paper 321 alleviated to prolong the service life of the filter paper 321, but also the frequent replacement of the filter paper 321 is prevented to reduce the use cost.

In some embodiments, the vibration applying assembly 500 is disposed on an outer wall of the dust box 300. Specifically, the vibration applying assembly 500 is disposed on an outer wall of the box body 310 of the dust box 300. Exemplarily, the vibration applying assembly 500 may be disposed on a side wall of the box body 310, such as a left side wall, a right side wall, a front side wall or a rear side wall, and may also be disposed on a bottom wall of the box body 310.

The vibration applying assembly 500 includes a striking member 510 and an operating member 520. The striking member 510 strikes the dust box 300 to vibrate. The operating member 520 is operable to generate a translational displacement component on the outer surface of the dust box 300, such that the striking member 510 generates vibration acting on the dust box 300. The vibration applying assembly 500 requires fewer components. With fewer components, the dust collection device 10 can impact and vibrate the dust box 300. The operating member 520 may be operated manually. It may also be a power component capable of outputting a linear motion. In some embodiments, the striking member 510 is configured to generate a translational displacement component on the outer surface of the dust box 300 with the operating member 520.

In some embodiments, a position on the dust box 300 that is striked by the striking member 510 changes during a striking process. By striking different positions of the dust box 300, different positions of the filter cartridge 320 can vibrate, thereby improving the dust removal efficiency and the dust removal effect, and cleaning the filter cartridge 320 more completely. Certainly, in other embodiments, the position on the dust box 300 that is striked by the striking member 510 may also be unchanged.

The operating member 520 further includes an operating portion 521. By gripping the operating portion 521 to apply a force, the operating member 520 can generate the translational displacement component on the outer surface of the dust box 300. A direction of the translational displacement component may be parallel to the outer surface of the dust box 300. Exemplarily, the direction of the translational displacement component may be parallel to a length direction, a width direction, or any oblique direction of the dust box 300.

In other embodiments, the striking member 510 is a striking steel ball. A plurality of striking recesses 311 that are arranged at intervals in a first direction are disposed on the outer surface of the dust box 300. By moving the operating member 520, the striking steel ball can move and fall into different striking recesses 311 in sequence, thereby striking the dust box 300. There may be one or more striking steel balls as required. There may be one or more rows of striking recesses 311 according to different numbers of striking steel balls.

A mounting groove 523 is further formed in the operating member 520. The mounting groove 523 extends along a second direction. The second direction is perpendicular to the first direction. The striking steel ball is movably disposed in the mounting groove 523, and can move synchronously in the second direction as the operating member 520 moves in the first direction, such that the striking steel ball moves away from the previous striking recess 311 and falls into the next striking recess 311. In a specific embodiment, the first direction is the length direction of the dust box 300, and the second direction is the width direction of the dust box 300.

The vibration applying assembly 500 further includes an elastic member 530. The elastic member 530 is disposed between the operating member 520 and the striking member 510, so as to accumulate a force for the striking member 510 to strike the outer wall of the dust box 300. Exemplarily, the elastic member 530 is a spiral spring. The spiral spring is disposed in the mounting groove 523. The spiral spring includes one end fixed on a bottom of the mounting groove 523, and another end connected to the striking steel ball.

To mount and guide the operating member 520, the vibration applying assembly 500 further includes a base 540. The base 540 is fixed on the outer wall of the dust box 300. The base 540 is provided with a mounting rail. The striking member 510 and the operating member 520 are attached on the base 540 through the mounting rail, and are movable along a direction of the mounting rail. An operating force acting on the operating member 520 has a component force along an arrangement direction of the mounting rail, so as to drive the operating member 520 to move along the direction of the mounting rail. The striking member 510 is driven by the operating member 520 to strike the base 540 along the mounting rail. A striking force is transmitted to the dust box 300 through the base 540.

In some embodiments, a mounting hole is formed in the base 540. A bolt is fixed on the box body 310 of the dust box 300 through the mounting hole. Certainly, in other embodiments, the base 540 may also be fixed on the box body 310 of the dust box 300 via magnetic attraction, insertion, clamping, and the like. In some embodiments, the base 540 and the box body 310 may be integrally formed, i.e., the base for mounting the vibration applying assembly 500 is disposed on the outer surface of the box body 310.

In some embodiments, the box body 310 of the dust box 300 is provided with a recess portion 313 and a boss portion 312. The boss portion 312 is disposed around the recess portion 313. The plurality of striking recesses 311 configured to allow the striking steel ball to fall into are formed in the recess portion 313. A through hole is formed in the base 540. The striking member 510 is driven by the operating member 520 to move among the plurality of striking recesses 311. In an embodiment, an arrangement direction for the plurality of striking recesses 311 is substantially the same as an extension direction of the mounting rail. After the base 540 is disposed on the box body 310, the base 540 is supported on the boss portion 312, an inner side of the base 540 protrudes from the boss portion 312, and the through hole directly faces the recess portion 313.

The operating member 520 further includes a sliding portion 522 connected to the operating portion 521. The sliding portion 522 passes through the through hole of the base 540. An end of the sliding portion 522 extends to a sliding groove between the base 540 and the box body 310. The sliding groove constitutes a part of the mounting rail. By applying a force to the operating portion 521 of the operating member 520, the sliding portion 522 may move in the sliding groove.

In some embodiments, the mounting rail includes a linear rail segment. In some embodiments, the mounting rail includes a curved rail segment. In some embodiments, the mounting rail includes both the linear rail segment and the curved rail segment. The linear rail segment and curved rail segment are not limited in terms of number and specific connection manner. In some embodiments, the mounting rail is a closed rail. The closed rail limits the operating member 520 desirably, such that the operating member 520 is not separated easily. In some embodiments, the mounting rail is an open rail, which facilitates mounting of the operating member 520 on the base 540.

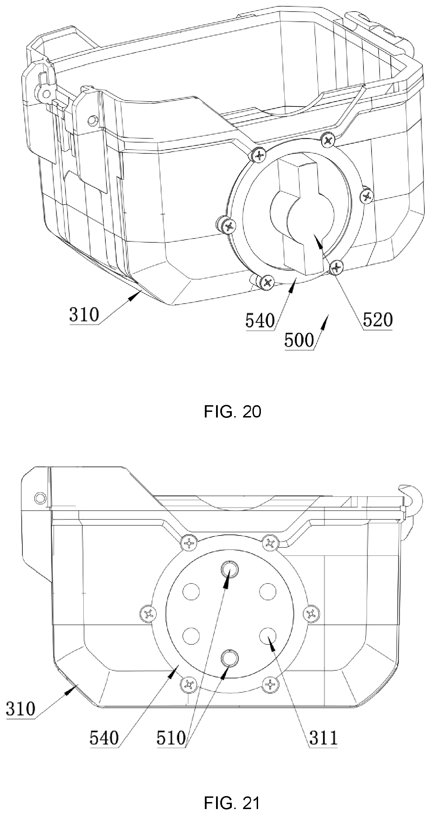

Certainly, in other embodiments, as shown in FIGS. 20 and 21, the base 540 may also be configured as a circular ring structure. The operating member 520 is disposed in the base 540. The operating member 520 is rotatably connected to the box body 310 of the dust box 300. The operating member 520 is rotatable in the base 540, such that the striking member 510 can achieve a circular moving track on the outer surface of the dust box 300 with rotation of the operating member 520. Specifically, a plurality of striking recesses 311 that are arranged at intervals in a circular ring are disposed on the outer surface of the dust box 300. By moving the operating member 520, the striking steel ball can move and fall into different striking recesses 311 in sequence, thereby striking the dust box 300. Exemplarily, the striking member 510 is a striking steel ball. There may be one or more striking steel balls as required. There may be one or more circles of striking recesses 311. One or more striking steel balls may be placed in each circle of striking recesses 311.

The present disclosure further provides an electric power tool. Referring also to FIGS. 1 and 2, the electric power tool includes the working tool 20 and the dust collection device 10. The working tool 20 includes the tool body 21, an electric motor 22, and a working end 23. The tool body 21 is provided with a battery mounting portion 26, so as to mount a battery pack 24. The electric motor 22 is disposed in the tool body 21. The working end 23 is configured to mount a working attachment 25 to perform operation. When the electric power tool is used, the working tool 20 performs operation on the working object. Dust generated during the operation enters the head mechanism 210. Dust from the head mechanism 210 at least flows through the housing 100 to the dust box 300. Clean airflow formed upon filtration of the dust box 300 at least flows through the housing 100 to the tool body 21.

In some embodiments, the working tool 20 is an electric hammer. The specific structure of the electric hammer is the prior art and will not be described in detail herein. The specific structure of the dust collection device 10 has been described in detail above and will not be repeated herein.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. A dust collection device, constructed to be disposed on a working tool to collect dust during operation, and comprising:
a housing that is provided with a mounting portion mounted to the working tool;
a transfer assembly that is at least partially located in the housing, and configured to transfer the dust;
a dust box that is connected to the housing, and in communication with the transfer assembly to collect the dust; and
a vibration applying assembly that applies vibration to the dust box;
wherein
the vibration applying assembly comprises a striking member and an operating member;
the operating member is operable to cause the striking member to periodically strike the dust box; and
the striking member strikes the dust box at at least two different striking positions, such that the striking position changes during a striking process.

2. The dust collection device according to claim 1, wherein the vibration applying assembly is fixedly disposed on an outer wall of the dust box.

3. The dust collection device according to claim 1, wherein the dust box is detachably connected to the housing.

4. The dust collection device according to claim 1, wherein
the operating member is operable by an operating force to generate a translational displacement component parallel to an outer surface of the dust box.

5. The dust collection device according to claim 1, wherein the vibration applying assembly further comprises: a base that is fixed on an outer wall of the dust box; the base is provided with a mounting rail; and the striking member and the operating member are attached on the base through the mounting rail, and are movable along a direction of the mounting rail.

6. The dust collection device according to claim 5, wherein the mounting rail comprises at least one of a linear rail segment and a curved rail segment.

7. The dust collection device according to claim 5, wherein the mounting rail is a closed rail or an open rail.

8. The dust collection device according to claim 5, wherein the base and the dust box are integrally formed.

9. The dust collection device according to claim 5, wherein the striking member is driven by the operating member to strike the base along the mounting rail; and a striking force is transmitted to the dust box through the base.

10. The dust collection device according to claim 1, wherein a plurality of striking recesses are formed in the dust box; and the striking member is driven by the operating member to move among the plurality of striking recesses.

11. The dust collection device according to claim 1, wherein the vibration applying assembly further comprises: an elastic member that is disposed between the operating member and the striking member, to accumulate a force for the striking member to strike an outer wall of the dust box.

12. The dust collection device according to claim 1, wherein the striking member is configured to generate a translational displacement component on an outer surface of the dust box with the operating member.

13. The dust collection device according to claim 1, wherein an operating force acting on the operating member has a component force along an arrangement direction of a mounting rail, to drive the operating member to move along a direction of the mounting rail.

14. The dust collection device according to claim 1, wherein filter paper and a filter paper holder are disposed in the dust box; and the filter paper is detachably disposed in the filter paper holder.

15. The dust collection device according to claim 14, wherein the filter paper is configured to be manually detachably disposed in the filter paper holder without an aid of an external tool.
